(19) Europäisches Patentamt
European Patent Office
Office européen des brevets

(11) **EP 3 990 326 B1**

(12) **EUROPEAN PATENT SPECIFICATION**

(45) Date of publication and mention
of the grant of the patent:
**16.08.2023 Bulletin 2023/33**

(21) Application number: **19739211.1**

(22) Date of filing: **26.06.2019**

(51) International Patent Classification (IPC):
***B60W 30/14*** $^{(2006.01)}$

(52) Cooperative Patent Classification (CPC):
**B60W 30/143;** B60W 2300/10; B60W 2300/12;
B60W 2520/10; B60W 2520/105; B60W 2530/10;
B60W 2552/15; B60W 2552/20; B60W 2552/40;
B60W 2720/103

(86) International application number:
**PCT/EP2019/067049**

(87) International publication number:
**WO 2020/259828 (30.12.2020 Gazette 2020/53)**

(54) **A METHOD FOR CONTROLLING A VEHICLE**

VERFAHREN ZUR STEUERUNG EINES FAHRZEUGS

PROCÉDÉ DE COMMANDE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2022 Bulletin 2022/18**

(73) Proprietor: **VOLVO TRUCK CORPORATION**
**405 08 Göteborg (SE)**

(72) Inventors:
• **SÖRENSEN, William**
**412 79 Göteborg (SE)**

• **HELLGREN, Jonas**
**413 16 Göteborg (SE)**

(74) Representative: **Valea AB**
**Box 1098**
**405 23 Göteborg (SE)**

(56) References cited:
EP-A1- 2 886 410          DE-A1-102008 039 950
DE-A1-102010 054 077     DE-A1-102012 218 100
US-A1- 2014 277 835      US-A1- 2019 106 014

**Description**

TECHNICAL FIELD

The invention relates to a method for controlling a vehicle, a computer program, a computer readable medium, and a control unit, or a group of control units.

The invention can be applied to heavy-duty vehicles, such as trucks and buses. Although the invention will be described with respect to trucks, the invention is not restricted to this particular type of vehicle, but may also be used in other vehicle types such as delivery vans and cars.

BACKGROUND

Increasing the productivity, while keeping operating costs as low as possible, is an aim of many vehicle operations, in particular commercial vehicle operations. The article "Look-ahead control for heavy trucks to minimize trip time and fuel consumption", Hellström, Ivarsson, Åslund and Nielsen, 2009, Control Engineering Practice, (Linköping University) discloses a drive mission for a heavy diesel truck. With aid of an onboard road slope database in combination with a GPS unit, information about the road geometry ahead is extracted. This look-ahead information is used in an optimization of the velocity profile with respect to a criterion formulation that weighs trip time and fuel consumption. A dynamic programming algorithm is devised and used in a predictive control scheme by constantly feeding the conventional cruise controller with new set points.

However, the calculations of the velocity profile are computationally heavy, and entails a demand for a high computational capacity of a control unit of the vehicle.

DE 10 2008 039950 A1 discloses a method of determining a speed profile for travel along a driving route using topology information.

SUMMARY

It is an object of the invention to reduce computational capacity requirements for controlling a vehicle. It is also an object of the invention to reduce computational capacity requirements for determining a velocity profile of a vehicle. An object of the invention is also to provide an efficient vehicle operation, while reducing computational capacity requirements of the vehicle.

The objects are reached with a method according to claim 1. Thus, the objects are reached with a method for controlling a vehicle, the method comprising

- establishing a plurality of example situations, wherein each example situation is characterized by a plurality of example situation features, including at least a velocity of the vehicle in the example situation, a velocity change of the vehicle in the example situation, and a road inclination in the example situation,
- determining, for each of a plurality of the example situations, an example situation cost dependent on a cost for operating the vehicle in the respective example situation,
- subsequently obtaining topology data, indicative of a topology of a route to be travelled by the vehicle,
- determining, based at least partly on the route topology, and at least a plurality of the example situation costs, a velocity profile for the vehicle along the route.

An example situation may be characterized by at least a combination of a velocity of the vehicle, a velocity change of the vehicle, and a road inclination where the vehicle is positioned. Thus, the velocity, the velocity change, and the road inclination may be simultaneous conditions to which the vehicle may be subjected to. As exemplified below, an example situation may also be characterized by a length of a segment of a road. As also exemplified below, an example situation may also be characterized by a load of the vehicle.

The example situations may be discrete. Thereby, an example situation may differ from another example situation by a step of one or more of the example situation features. Further, the example situations may be distributed throughout a driving envelope of the vehicle. Thus, the example situations may discretely cover all feasible combinations of discrete vehicle speeds, vehicle velocity changes, and road inclinations.

Each example situation cost may be determined for the respective example situation. The example situation cost may be indicative of a cost for operating the vehicle in the respective example situation. The example situation cost may depend on the energy consumption of the vehicle at the example situation. Where a propulsion arrangement of the vehicle comprises an internal combustion engine, the example situation cost may be dependent on the engine fuel consumption at the respective example situations. Where the propulsion arrangement comprises an electric motor, the example situation costs may be dependent on the electric energy consumption at the respective example situations.

Where the propulsion arrangement comprises an electric energy storage device, such as a battery pack, the example situation cost may be dependent on a state of health, e.g. a degree of degradation, of the energy storage device. In some embodiments, the dependence on the state of health may be a dependence on a change of the state of health in the example situation. For example, the example situation cost could be dependent on a change of the state of health, when travelling through a segment of the route, of a given length, at a given initial velocity, a given velocity change, and a given road inclination. Thereby, an absolute value of the state of health may be omitted. For example, a relatively high power of a propulsion arrangement of the vehicle, may result in a larger change of the state of health, and therefore a higher example situation cost, than a relatively low power of the propulsion arrangement.

The example situation costs may be determined by means of a vehicle model. Such a model may include a model of a propulsion arrangement of the vehicle. A propulsion arrangement of the vehicle may include an internal combustion engine, and/or an electric motor. The prolusion arrangement may further include an electric energy storage device, such as a battery pack. The vehicle model may further include a brake model.

In some embodiments, some, or all, of the example situation costs may be determined by data collection during driving of a vehicle, or the vehicle. Thus, the method may comprise establishing the example situation features of a plurality of example situations, as actual situation features determined from real operation data. Thus, the method may comprise establishing a plurality of actual example situations, wherein each example situation is characterized by a plurality of actual example situation features, determined from real operation data. Further, the method could comprise for each of a plurality of the actual example situations, an actual example situation cost dependent on a cost for operating the vehicle in the respective actual example situation. The real operation data may be collected during one or more test drives with the vehicle, or another vehicle, preferably of the same model. Such test drives may be done under the control of a human driver, or with autonomous driving. Thereby, an improvised, or preliminary, speed profile may be used. For example, the vehicle velocity, and the vehicle velocity change, may be measured. The road inclination may be determined from map data. The determination of the actual example situation costs may comprise a calculation of an actual energy consumption. Such a calculation may be done in dependence on one or more vehicle sensor signals. For example, in a vehicle with a propulsion arrangement comprising an electric motor, the actual energy consumption may be determined by means of a battery current sensor.

Preferably, the method comprises establishing an approximation function, based partly on at least a plurality of the example situations, and based partly on the example situation costs for the example situations on which the approximation function is partly based. The approximation function may be partly based partly on the example situation features of the example situations on which the approximation function is partly based. Preferably, the approximation function is adapted to provide a predicted situation cost in dependence on a plurality of predicted situation features of a predicted situation, the predicted situation features including at least a velocity of the vehicle in the predicted situation, a velocity change of the vehicle in the predicted situation, and a road inclination in the predicted situation.

Thus, the method may comprise establishing, based partly of the topology data, a plurality of predicted situations, wherein each predicted situation is characterized by a plurality of predicted situation features, including at least a velocity of the vehicle in the predicted situation, a velocity change of the vehicle in the predicted situation, and a road inclination in the predicted situation. The method may further comprise determining, for each of a plurality of the predicted situations, a predicted situation cost dependent on a cost for operating the vehicle in the respective predicted situation. The velocity profile may be determined at least based partly on the predicted situations and the predicted situation costs. Preferably, the predicted situation features characterizing each predicted situation includes a length of a segment of the route. Thus, each predicted situation may be characterized by a plurality of predicted situation features, including at least a velocity of the vehicle, a velocity change of the vehicle, a road inclination, and a length of a segment of the route. The segment length can be expressed as a distance between two positions along the route.

Preferably, the approximation function is established before the topology data is obtained. The approximation function may be established before the vehicle is put into operation. The approximation function may be formed based on points in a space formed by a driving envelope of the vehicle. Such a driving envelope may be formed by example situation costs and example situation features. Each point may be formed by a combination of an example situation cost, and the example situation features of the example situation for which the situation cost was determined. The approximation function may be of a known class of functions. For example, the approximation function could be a multivariate polynomial, a multivariate rational function, or a gaussian function. The approximation function may be formed, e.g. by interpolation, or extrapolation, of the points in the vehicle driving envelope.

Preferably, the method comprises establishing, in dependence on the topology data, a plurality of predicted situations, and determining, for each of at least a plurality of the established predicted situations, by means of the approximation function, a predicted situation cost indicative of a cost for operating the vehicle in the respective predicted situation, wherein the velocity profile is determined partly based on the determined predicted situation costs. Thus, the velocity profile may be determined partly based on the example situation costs, by being determined partly based on the predicted situation costs, which in turn are determined by means of the approximation function, which in turn is established based partly on at least a plurality of the example situation costs.

The example situation costs may be stored, e.g. in a data storage device. More specifically, by determining, for each of a plurality of, or all of, the example situations, a example situation cost dependent on a cost for operating the vehicle in the respective situation, a storage of example situation costs may be provided.

As understood, the method may comprise determining, based at least partly on the route topology, and at least a plurality of the example situations, and the example situation costs therefore, a velocity profile for the vehicle along the route. The computational capacity requirements for determining an example situation cost may be relatively large. However, the example situation costs are determined before the topology data is obtained. Thereby, the determination of the velocity profile along the route may be done with a relatively low computational capacity. The reason is that the operational costs for segments of the route do not have to be calculated by means of a vehicle model. Instead, the operational costs for segments of the route may be determined by means of example situations, and example costs. For example, the operational costs for segments of the route may be determined by means of the approximation function, which is established based on the example situations, and example costs.

Alternatively, an operational cost for a segment of the route may be determined by merely identifying a stored example situation cost, which is determined for a velocity, a velocity change, and a road inclination, which, at least approximately, are the same as a velocity, a velocity change, and a road inclination, of the route segment. Thereby, the stored example situation cost may also be determined for a length of a road segment of the example situation, which, at least approximately, is the same as the length of the route segment in the route for which the velocity profile is to be determined.

The storage of example features may, for example, be provided as a table with discrete values of the example situation features. Thereby, the table may include a finite number of combinations of discrete example situation features. The table may provide, for each of a plurality of the combinations of discrete example situation features, a value of the example situation cost.

In some embodiments, the velocity change of an example situation may be expressed as two vehicle velocity values and a distance between two positions at which a respective of the velocities occur. As exemplified further below, the route may be divided into segments. Thereby, an example situation may be characterized partly by a vehicle velocity at the entry of a segment, and a vehicle velocity at an exit of a segment of a road. As suggested below, the example situation may also be characterized by a distance between the entry and the exit of the segment. The acceleration may be constant throughout the segment. The example situation cost may be a cost for operating the vehicle while travelling through the segment. The velocity change associated with the example situation, may be positive, negative, or zero.

The segments of the route may be of equal length. In some embodiments, one or more of the segments present lengths that differ from the lengths of the remaining segments. In some embodiments, each segment length may differ from all other segment lengths in the route. The segments may be of any length, but preferably relatively short, such as 1 m, or 10 m. Preferably, the segments are short enough to assume a constant road inclination along the respective segment.

In some embodiments, the velocity change of an example situation may be expressed as a value of an acceleration parameter. Thereby, the example situation may be characterized at least partly by a momentary vehicle velocity, a momentary vehicle acceleration, and a momentary road inclination. The example situation cost for such an example situation may be in the form of a cost per time, or cost flow.

Preferably, the example situation features characterizing each example situation includes a length of a segment of a road. Thus, each example situation may be characterized by a plurality of example situation features, including at least a velocity of the vehicle, a velocity change of the vehicle, a road inclination, and a length of a segment of a road. The segment length can be expressed as a distance between two positions along the road.

The road inclination may be expressed as an angle of the road. In some embodiments, the road inclination may be expressed as a height difference between two position along the road, and a distance between the positions.

The determined velocity profile is preferably continuous throughout the route. As exemplified further below, the route may be divided into segments. In such embodiments, a constraint of the velocity profile determination is preferably that the velocity at an entry of one of the segments, is the same as the velocity at the exit of the immediately preceding segment.

In some embodiments, the method comprises determining, based at least partly on the route topology, and the plurality of the example situation costs, a route cost dependent on a cost of operating the vehicle when travelling through the route.

The example situations, and the example situation costs, may be used for the route cost determination in a variety of manners. For example, a sequence of positions may be established along the route. Thereby, the route may be divided into a plurality of segments. Thereby, the ends of a segment may be defined by adjacent positions. The velocity at a position may be determined in dependence on a previously determined velocity at an adjacent position. From the topology data the road inclination at a position may be determined. The velocity at a position, and the velocity change, and road inclination along the segment, may be used to determine a predicted situation cost by means of the approximation function. Alternatively, the velocity at a position, and the velocity change, and road inclination along the segment, may be used to look up an example situation cost of an example situation, with example situation features identical to, or approximately identical to, the velocity at a position, and the velocity change, and road inclination along the segment.

The method may comprise determining the velocity profile includes the use of a weighting function, dependent on the cost of operating the vehicle when travelling through the route, and the duration of the vehicle travelling through the route. The weighting function may provide a desired balance of the operating cost and the duration. Thus, in some embodiments, a weighting function, dependent on the cost of operating the vehicle when travelling through the route, and the duration of the vehicle travelling through the route, is established. The weighting function may be a function of the operating cost, the duration, and a weighting variable. The balance of the operating cost and the duration may be adjusted by means of the weighting variable. In some embodiments, if a mission of the vehicle is urgent, more weight is given to the duration of travelling through the route, than if the mission is non-urgent. In some embodiments, the weighting function increases in value with an increasing cost of operating the vehicle when travelling through the route, and the weighting function increases in value also with an increasing duration of the vehicle travelling through the route. Thereby, the velocity profile may be determined such that the velocity profile minimizes the weighting function. Thereby, an effective way of balancing vehicle operation costs with the vehicle productivity, i.e. the vehicle transport duration, may be provided.

The minimization of the weighting function may be done according to a variety of manners. In some embodiments, each of a plurality of, or all of, the example situation costs may be identical with a cost for operating the vehicle in the respective example situation. Thereby, the weighting function may be used once the example situation costs have been retrieved, or the approximation function has been used, for the velocity profile determination. In other embodiments, as exemplified below, each of a plurality of, or all of, the example situation costs may be a product of the use of a weighting function. Thereby, each of a plurality of, or all of, the example situation costs may be dependent on the cost of operating the vehicle in the respective example situation, and a vehicle velocity in the example situation.

Preferably, determining the velocity profile comprises establishing a sequence of positions along the route. Preferably, the method further comprises associating with each of a plurality of, preferably all of, the positions a respective altitude of the position, and/or a respective road inclination at the position. Such an association will assist in the route cost determination by means to the example situation costs. Where each of a plurality of, or all of, the example situations involve a segment of a road, the positions along the route are preferable separated by a distance which is equal to the length of the example situation segments.

Preferably, the method comprises determining for each of a plurality of pairs of adjacent positions, a predicted situation cost for operating the vehicle from one to the other of the pair of adjacent positions, based at last partly on a predicted vehicle velocity at the pair of adjacent positions, and a predicted velocity change from one to the other of the pair of adjacent positions. Thereby, the predicted situation costs are preferably determined by means of an approximation function established based partly on at least a plurality of the example situations, and based partly on the example situation costs for the example situations on which the approximation function is partly based. The approximation function may be partly based partly on the example situation features of the example situations on which the approximation function is partly based. The velocity profile is preferably determined partly based on the determined predicted situation costs.

As suggested, the method may comprise establishing a plurality of predicted situations, and determining predicted situation costs dependent on costs for operating the vehicle in the respective predicted situations. The method may further comprise adjusting the predicted situation costs, based at least partly on the time of driving between the adjacent positions. Alternatively, or in addition, the method may comprise adjusting the example situation costs, based at least partly on the time of driving between the adjacent positions in the respective example situations.

Determining the velocity profile may comprise setting up a matrix for the route, with the sequence of route positions, and one or more vehicle velocity values for each position. Preferably there are a plurality of velocity values for each of a plurality of, or all or, the route positions. A plurality of velocity values for a route position may be discrete, i.e. stepped. The steps of the velocity values may be selected such that they are suitable for a determination of candidate predicted situation costs, as exemplified below. The velocity values in the matrix are herein also referred to as velocity nodes. As understood from examples below, a predicted situation cost may be a cost for moving from one node to another in the matrix.

The matrix may be embodied in a variety of ways, e.g. as a multi-dimensional table. The matrix may be limited by vehicle velocity limits. A vehicle velocity limit may be provided by a legal speed limit. A vehicle velocity limit may be provided by a curvature on the route. A vehicle velocity limit may be provided by a traffic situation entailing a reduced velocity. A vehicle velocity limit may be provided by a weather situation. A vehicle velocity limit may be provided by a maximum velocity capacity of the vehicle. A vehicle velocity limit may depend on the road inclination. The vehicle speed limits may differ from one route position to another route position. For example, for a first position there could be velocity values up to a first maximum velocity, and for a second position, there could be fewer velocity values than for the first position, with a second maximum velocity being lower than the first maximum velocity.

Preferably the method comprises determining, for a pair of adjacent positions in the sequence of positions, a vehicle velocity at one of the positions, and determining a plurality of candidate predicted velocity changes, each providing a respective vehicle velocity at the other of the positions. Each candidate predicted velocity change may represent a move from one velocity node to another velocity node, in the matrix exemplified above. For example, a vehicle velocity at a position, of the pair of adjacent positions, first reached in the vehicle travelling direction may be determined, and thereupon a plurality of candidate predicted velocity changes may be determined, each providing a respective vehicle velocity at the next position in the vehicle travelling direction. Alternatively, a vehicle velocity at a position, of the pair of adjacent positions, last reached in the vehicle travelling direction may be determined, and thereupon a plurality of candidate predicted velocity changes may be determined, each providing a respective vehicle velocity at the preceding position in the vehicle travelling direction.

It should be noted that the candidate predicted velocity changes are preferably feasible velocity changes. Thus, the candidate predicted velocity changes are preferably such that they are possible for obtain in view of a performance capacity of the vehicle. Further, the candidate predicted velocity changes are preferably such that they are possible for obtain in view of the road inclination.

The method may comprise determining, for each of a plurality of, or all of, the candidate predicted velocity changes, a candidate predicted situation cost, based at least partly on at least one of the example situation costs. Each of a plurality of candidate predicted situations may be characterized by a plurality of predicted situation features, including the vehicle velocity, of the respective candidate predicted velocity change, at one of the positions, the vehicle velocity, of the respective candidate predicted velocity change, at the other of the positions, and the road inclination of the respective candidate predicted velocity change. The predicted situation features may also include a length of a segment of the route, such as a distance between two positions on the route.

Preferably, at least a plurality of the candidate predicted situation costs are determined, by means of an approximation function established based partly on at least a plurality of the example situations, and based partly on the example situation costs for the example situations on which the approximation function is partly based. The approximation function may be partly based partly on the example situation features of the example situations on which the approximation function is partly based. Thereby, the candidate predicted situation costs may be determined, by means of the approximation function, based at last partly on a predicted vehicle velocity at the pair of adjacent positions, and a predicted velocity change from one to the other of the pair of adjacent positions.

In some cases, one or more of the candidate predicted situation costs may be determined by identifying a respective example situation cost of an example situation characterized by example situation features matching the respective predicted situation features. Thereby, an easily determination of the candidate predicted situation costs may be made. Herein, matching may mean being identical, or approximately identical, to something.

The method may comprise determining whether a predicted velocity change candidate is feasible. This may be done with a Boolean function. Alternatively, it may be done by assigning a very high example situation cost to an example situation corresponding to the predicted velocity change candidate. Thereby, the example situation cost may be high enough for the method to exclude the predicted velocity change candidate based on the candidate predicted situation cost thereof.

The approximation function may be established by an interpolation of two or more of the example situation costs. Thus, one or more of the candidate predicted situation costs may be determined by an interpolation of the two or more of the example situation costs. The approximation function may provide a significant advantage in its ability to provide a candidate predicted situation cost for a situation not stored in the vehicle.

Thus, embodiments of the invention may provide an approximation function for calculating the cost for travelling through a segment of the route. This may be done for example where the combination of the respective predicted situation features is not identical to a combination of example situation features of any of the example situations. Thereby, a number of candidate predicted situation costs may be obtained from a smaller number of example situation costs. Thereby, the number of example situations may be kept relatively low.

The method may further comprise adjusting the candidate predicted situation costs, based at least partly on the time of driving between the adjacent positions. In some embodiments, the candidate predicted situation costs are determined based at least partly on the example situation costs, and thereupon, the candidate predicted situation costs are adjusted. The adjustment can be done by a weighting function, balancing the cost of operating the vehicle when travelling between the adjacent positions, with the duration of travelling between the adjacent positions. In some embodiments, the example situations may involve a road distance which is the same as the distance between two adjacent positions on the route. In some embodiments, the example situation costs may be adjusted based at least partly on the time of driving between adjacent positions in the respective example situations. Thereby, the example situation costs, used for the determination of the candidate predicted situation costs, may be the result of a weighting function, balancing the cost of operating the vehicle when travelling between the adjacent positions, with the duration of travelling between the adjacent positions. Thereby, the example situations may take into consideration the duration of the vehicle travel. This means that the determination of the candidate predicted situation costs may be simplified.

Thereby the method may comprise determining, subsequently to the adjustment of the example situation costs, and/or the candidate predicted situation costs, the velocity profile for the route, by selecting, for each pair of adjacent positions, one of the candidate predicted situation costs, such that the sum of the candidate predicted situation costs, selected throughout the route, are minimized. As suggested, the example situation costs may be calculated before the route is known. Thereby, the computational capacity needed for the determination of the velocity profile for the route, will be considerably lower than in a case where the costs are calculated, e.g. from a vehicle model, as a part of the determination of the vehicle profile. In addition, the adjustment of the example situation costs, and/or the candidate predicted situation costs, provides for a balanced trade-off between operation costs and productivity.

Preferably, the example situation costs are determined separately from the vehicle. Preferably, the example situation costs are determined separately from a control unit of the vehicle. Herein, an activity performed separately from the vehicle is also referred to as an activity performed off-board. For example, the example situation costs may be determined by means of a control unit, e.g. a computer, which is separated from the vehicle. The example situation costs may be determined by means of a vehicle model.

Thereby, a vehicle control unit may be relieved from the determination of the example situation costs. Since the determination of the example situation costs may require a large computational capacity, such a relief allows for avoiding a costly increase in the vehicle control unit computational capacity.

As suggested, preferably the method comprises establishing an approximation function, based partly on at least a plurality of the example situations, and based partly on the example situation costs for the example situations on which the approximation function is partly based. The approximation function may be provided for determining predicted situation costs for respective predicted situations of the vehicle. Thereby, the approximation function may be stored in the vehicle. Thereby, the approximation function may be established separately from the vehicle. It should be noted that the approximation function, established based on example situations and example situation costs, may require a particularly small data storage space.

However, in some embodiments, the method may comprise storing at least a plurality of the example situation features, and at least a plurality of_the example situation costs, in the vehicle.

Herein, an activity performed in the vehicle is also referred to as an activity performed onboard. For example, the approximation function, and/or the example situation features, with the example situation costs, may be stored in a control unit of the vehicle, or in a data storage unit in the vehicle, accessible to a vehicle control unit. Thereby, the vehicle control unit may perform the steps of obtaining the topology data, indicative of a topology of a route to be travelled by the vehicle, and determining, based at least partly on the route topology, and by means of the approximation function, a velocity profile for the vehicle along the route. Alternatively, the vehicle control unit may determine, based at least partly on the route topology, and at least a plurality of the example situation costs, a velocity profile for the vehicle along the route. For example, setting up a matrix, as exemplified above, may be done on-board. The determination of the candidate predicted velocity changes may be done on-board. Also, the determination of the candidate predicted situation costs may be done on-board. The matrix set-up, the candidate predicted velocity change determination, and/or the candidate predicted situation cost determination, may be done before, or while, the vehicle is travelling.

Embodiments of the invention allow avoiding making resource consuming on-board calculations of the example situation costs. By calculating, off-board, e.g. by means of a vehicle model, the example situation costs, and using the approximation function, onboard, vehicle model based calculations can be avoided, which reduces the onboard processing capacity requirements.

Preferably, the method comprises determining an actual cost for operating the vehicle, and adjusting the approximation function in dependence on the determined actual cost. In some embodiments, the method comprises determining an actual cost for operating the vehicle, and adjusting an example situation cost in dependence on the determined actual cost. Thereby, the accuracy of the example situation costs may be improved by real operation data. For example, the actual cost determination may comprise a calculation of an actual energy consumption. Such a calculation may be done in dependence on one or more vehicle sensor signals. For example, in a vehicle with a propulsion arrangement comprising an electric motor, the actual energy consumption may be determined by means of a battery current sensor.

Preferably, the plurality of example situation features characterizing the example situations include a load of the vehicle. Thus, in addition to the velocity of the vehicle, the velocity change of the vehicle, and the road inclination, the example situation costs may be determined in dependence on the vehicle load. The vehicle load may be expressed in any suitable manner, e.g. as a net load, a total vehicle mass, or a total vehicle weight.

Thereby, an approximation function based on at least a plurality of the example situation costs, and values of the example situation features, including the load, of the example situations for which the example situation costs were determined. Thereby, input parameters to the approximation function may be a load, a route segment length, a velocity, a velocity change, and a road inclination.

Thereby, the determination of the velocity profile along the route may involve determining an actual load of the vehicle. Thereby, appropriate example situations may be selected for the velocity profile determination. Where a candidate predicted situation cost is determined for a candidate predicted velocity change, as exemplified above, the actual load of the vehicle may be identical, or approximately identical to a load of an example situations used for the candidate predicted situation cost determination. Alternatively, a candidate predicted situation cost may be determined in dependence on an interpolation of loads of a plurality of example situations.

Where distances between positions along the route, for the velocity profile determination, vary, the distance between two positions may be a further example situation feature of the example situations.

The objects are also reached with a computer program according to claim 23, a computer readable medium according to claim 24, or a control unit, or a group of control units, according to claim 25.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1 is a schematic view of a vehicle and a stationary control unit.

Fig. 2 is a diagram depicting steps in a method, according to an embodiment of the invention, for determining a velocity profile of the vehicle in fig. 1.

Fig. 3 shows a table with parameters used for the velocity profile determination.

Fig. 4 shows a contour of a route to be travelled by the vehicle.

Fig. 5 and fig. 6 depict a matrix for determining the velocity profile of the vehicle.

Fig. 7 is a flow diagram depicting steps in a method according to a more general embodiment of the invention.

DETAILED DESCRIPTION OF EXAMPLE EMBODIMENTS OF THE INVENTION

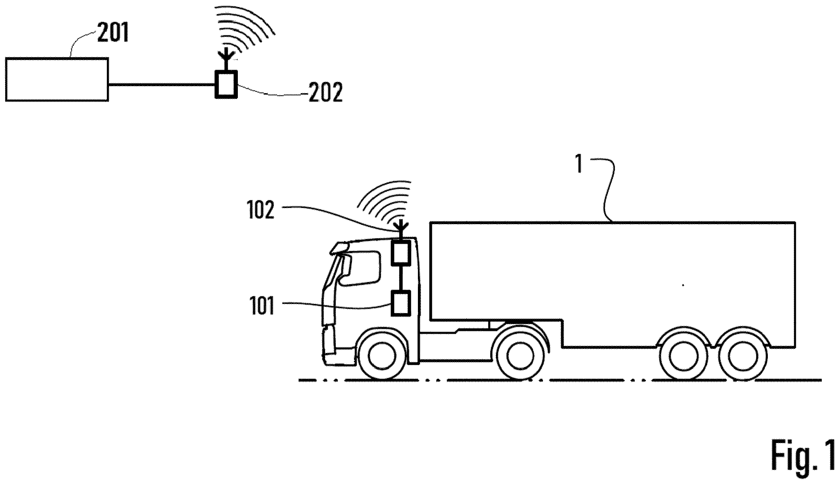

Fig. 1 shows a vehicle 1. In this example, the vehicle 1 is a truck with a semitrailer. However, the invention is equally applicable to other types of vehicles, such as cars, buses, dump trucks, and mining vehicles.

The vehicle includes a powertrain. The powertrain includes a propulsion arrangement. Embodiments of the invention are applicable to a variety of propulsion arrangements. The propulsion arrangement may include an internal combustion engine. The vehicle may be arranged to be driven by an engine only. The propulsion arrangement may include an electric motor. The propulsion arrangement may be a hybrid arrangement with an engine and a motor. In this example, the vehicle is a fully electric vehicle.

The vehicle comprises a vehicle control unit 101, arrange to control functions of the vehicle, such as its propulsion, and braking. The control unit is arranged to control the propulsion arrangement. The control unit is arranged to control a braking system of the vehicle. The vehicle control unit 101 may be provided as a single physical unit, or as a plurality of physical units, arranged to communicate with each other.

The vehicle also comprises vehicle equipment for wireless communication 102. The vehicle control unit 101 is arranged to receive data via the vehicle communication equipment 102.

Fig. 1 also shows a stationary control unit 201. The stationary control unit 201 may be provided as a computer. The stationary control unit 201 is connected to stationary equipment for wireless communication 202. The stationary control unit 201 is arranged to send data via the stationary communication equipment 202.

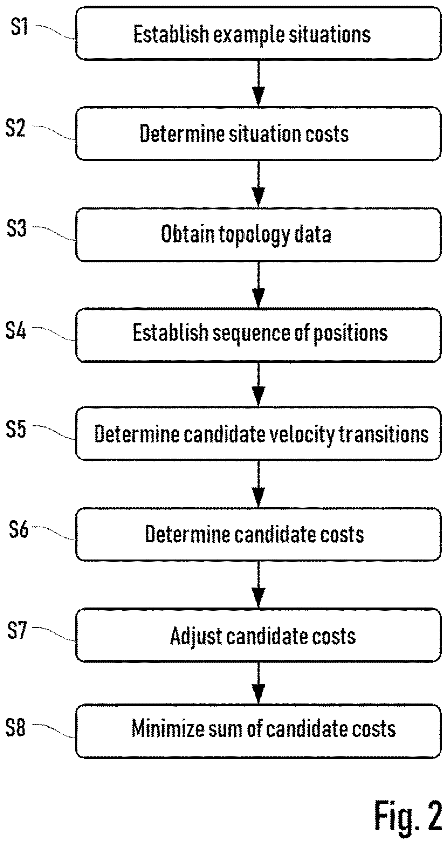

With reference to fig. 2, a method according to an embodiment of the invention will be described.

The method comprises establishing S1 a plurality of example situations for one or more vehicles. In this example, the example situations are determined by the stationary control unit 201. In this example, the example situations are described as referring to a single vehicle, or a single type of vehicle, such as a specific vehicle model. However, in some embodiments, some of the example situations may refer to one type of vehicle, while other example situations refer to one or more other types of vehicles.

Each example situation is characterized by a plurality of example situation features. The example situation features include a velocity of the vehicle, a velocity change of the vehicle, a road inclination, and a load of the vehicle. An example situation feature may represent a value of the velocity, the velocity change, the road inclination, or the load. The values of these parameters may be stepped from one example feature to another. Further, different parameter values may be distributed to different example situations. Each example situation may be characterized by a unique combination of example situation features.

The example situation features may also include a length of a segment of the route, e.g. expressed as a distance between two positions along the route.

The method further comprises determining S2, for each of a plurality of, or all of, the example situations, an example situation cost. The example situation cost is dependent on a cost for operating the vehicle in the respective example situation. As exemplified below, each example situation cost may also be dependent on the time of travelling, or the velocity, at the respective example situation.

The example situation costs are determined by means of a vehicle model. The vehicle model may include a model of the powertrain. The model may include energy losses of the powertrain. The vehicle model may include a model of the propulsion arrangement. Where the propulsion arrangement is an electric hybrid propulsion arrangement, or a fully electric propulsion arrangement, the vehicle model may include a model of the electric motor, and a model of an electric storage device, such as a battery, or a battery pack. The electric storage device model may include a model of the state of health of the storage device. The electric storage device model may include a battery degradation model. The storage device capability may be dependent on a state of charge of the storage device.

The vehicle model may further include a model of a braking system of the vehicle. The braking system may include service brakes. The braking system may include a function of regenerative braking by means of the motor and the storage device. Further, the vehicle model may include a model of a road friction. The method may aim to minimize the use of the service brakes. For this, example situations entailing, as indicated by the vehicle model, the use of service brakes, may be assigned a relatively high example situation cost.

From the velocity, the velocity change, and the road inclination of an example situation, a required force, torque, and/or power, of the powertrain, may be determined. The vehicle model may include constraints of the vehicle, or the powertrain. Such constraints may indicate whether or not a candidate for an example situation is feasible. For example, there might be a limit of a vehicle acceleration in dependence on the propulsion arrangement capacity, and the road inclination. Also, there might be a limit of a negative vehicle acceleration in dependence on a capacity of the braking system, or the road friction. In addition, there might be a limit of a negative vehicle acceleration in dependence on a negative road inclination. The example situation costs may be determined S2 only for feasible example situations.

As exemplified below, a route to be travelled by the vehicle may be divided into segments. The segments may be of different length, or of equal length. Where the segments are of equal length, the segments are herein also referred to as unit segments. Also, each example situation may involve a travel of the vehicle through a unit segment. Thereby, an example situation may be characterized partly by a segment length, a vehicle velocity at the entry of the unit segment, and a vehicle velocity at an exit of the segment, as well as an inclination of the segment.

The example situation costs are determined S2 by the stationary control unit 201. Thus, the example situation costs are determined separately from the vehicle. Each example situation cost may be a cost for operating the vehicle in the respective example situation. The cost for operating the vehicle may be dependent on the energy consumption of the vehicle at the respective example situation. The cost for operating the vehicle in the respective example situation is determined by means of the vehicle model.

Thus, each example situation, with its example situation features, is related with a respective of the example situation costs.

The method further comprises establishing, for determining predicted situation costs based on predicted situation features of respective predicted situations of the vehicle, an approximation function based on at least a plurality of the example situation costs CS, and values of the example situation features of the example situations for which the example situation costs were determined.

The approximation function is sent to the vehicle control unit 101. Alternatively, data representing the determined example situation features, and the example situation costs are sent to the vehicle control unit 101. The sending may be done by means of the communication equipment 102, 202. The approximation function is stored in the vehicle, in the vehicle control unit 101, or accessible thereto.

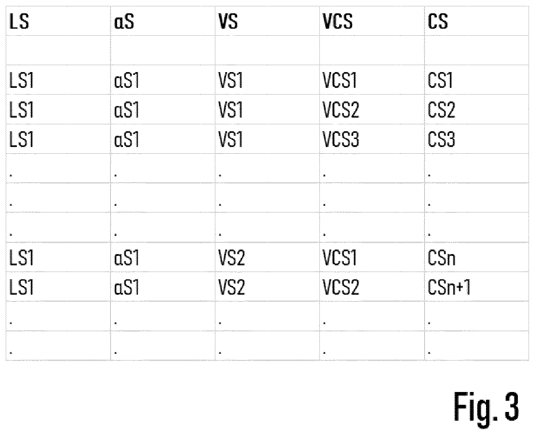

The approximation function is stored in the vehicle control unit 101. Alternatively, the example situation features, and the example situation costs, are stored in the vehicle, in the vehicle control unit 101, or accessible thereto. In the vehicle control unit 101, the example situation features, and the example situation costs, may be provided in the form of a table. Fig. 3 shows an example of such a table. The table may present, for each combination of a vehicle load LS, a road inclination $\alpha$S, a vehicle velocity VS, and vehicle velocity change VCS, an example situation cost CS. As stated, the example situation features may also include a length of a segment of the route, not shown in fig. 3.

Thus, for determining the velocity profile, the vehicle control unit 101 is not burdened with the computationally demanding work of determining the costs for operational situations. Instead, the vehicle control unit uses the approximation function, and/or the example situation features, and the example situation costs, as exemplified below.

The velocity profile may be determined while the vehicle is stationary, e.g. for a planned route. Alternatively, the velocity profile may be determined repetitively while the vehicle is travelling, for a route forming a part of a trip of the vehicle. The route may be determined, e.g. by means of a journey planning device, such as a GPS (Global Positioning System) unit. For this presentation, such a device may be understood as forming a part of the vehicle control unit 101. The determination of a velocity profile may be done at regular time intervals, or driving distance intervals, e.g. every 100 metres.

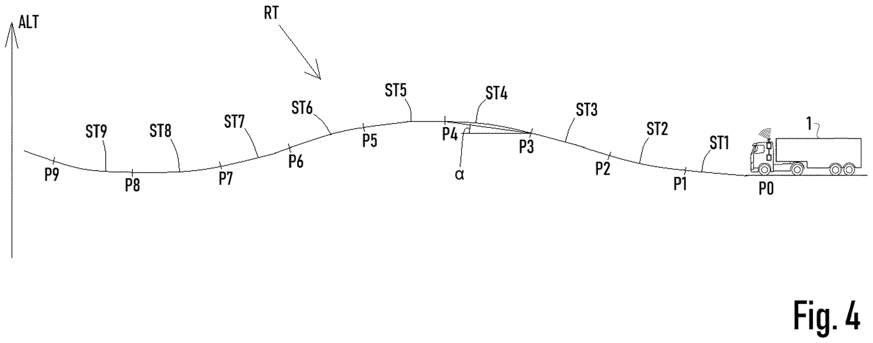

Reference is made also to fig. 4. The method comprises obtaining S3 topology data, indicative of a topology of a route RT to be travelled by the vehicle. The topology data may be obtained from map data. A velocity profile for the vehicle along the route is determined, based at least partly on the route topology, and at least a plurality of the stored example situation costs CS. This determination comprises establishing S4 a sequence of positions P0-P9 along the route. Thereby, the route is divided into segments ST1-ST9. In this example, the segments are of equal length, herein referred to as a unit segment. The length of the route segments is the same as the length of the segments of the stored example situations. It should be noted that in some embodiments, lengths of the segments of the route may differ from each other. It should be noted that the number of positions in fig. 4 is, for simplicity of this presentation, considerably lower, than in a practical embodiment of the invention. For example, the length of the segments may be 10 metres. This would mean that for a route that is 1 km, there would be 101 positions, one every 10 metres.

In dependence on the topology data, an altitude ALT is associated with each position P0-P9. In this example, the road inclination of each segment ST1-ST9 is assumed to be constant. As exemplified in fig. 4, the road inclination $\alpha$ of a segment ST4 can be determined by the altitudes of the positions P3, P4 at the ends of the segment ST4, and the length of the segment.

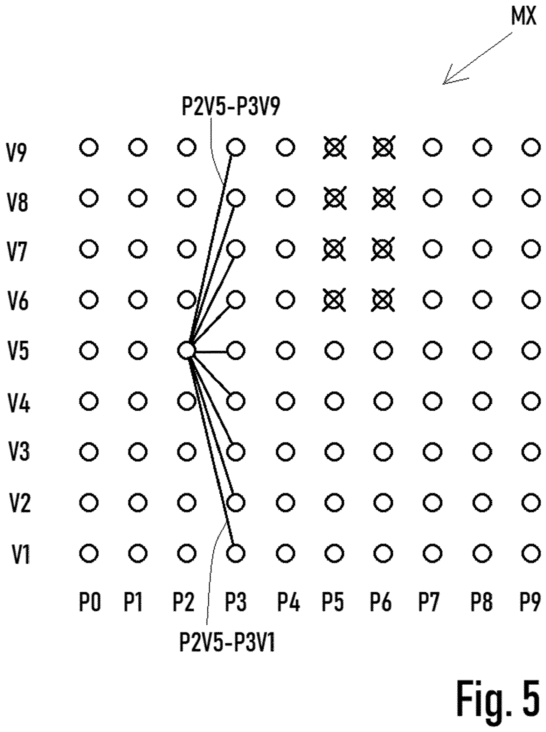

Reference is made also to fig. 5. Determining the velocity profile comprises setting up a matrix MX for the route RT. The matrix includes the sequence of route positions P0-P9. For each position, a plurality of vehicle velocity values V1-V9 are provided. It should be noted that the number of positions and velocities in the matrix in fig. 5 is, for simplicity of this presentation, considerably lower, than in a practical embodiment of the invention.

The velocity values are indicated in fig. 5 with circles. A pair of a position and a velocity, in the matrix, is herein also referred to as a node. The velocity values are, for each position, stepped, discrete values. The size of the steps can be chosen with an aim to obtain a suitable balance between a relatively low size of the task of computing the velocity profile, and the accuracy of the approximation of the computation. For example, the velocity steps may be 0.1 m/s.

Consideration is made for velocity limits, for example imposed by road curves, or legal speed limits. For this, some velocity values may be removed in the matrix MX. This is exemplified in fig. 5 by removing the nodes of some velocities V6-V9 at some of the positions P5, P6. Also, lower velocity limits may be taken into consideration for the matrix.

The method further comprises determining, based at least partly on the route topology, and the plurality of the example situation costs CS, a route cost. The route cost is dependent on a cost of operating the vehicle when travelling through the route. As exemplified in fig. 5, determining the route cost comprises determining S5, for a pair of adjacent positions P2, P3 in the sequence of positions P0-P9, a vehicle velocity V5 at one of the positions P2, and determining a plurality of candidate predicted velocity changes, each providing a respecting vehicle velocity V1-V9 at the other of the positions P3. The candidate predicted velocity changes are in the example in fig. 5 indicated with lines between the nodes in question. The candidate predicted velocity changes in this example are designated P2V5-P3V1, P2V5-P3V2, P2V5-P3V3, etc.

The method further comprises determining S6, for each of a plurality of the candidate predicted velocity changes, a candidate predicted situation cost, based at least partly on at least one of the stored example situation costs CS, by using the approximation function, as exemplified below. One or more of the candidate predicted situation costs may be determined by using the approximation function. Thereby, a candidate predicted situation cost may be determined by an interpolation of the two or more of the example situation costs CS.

Alternatively, one or more of the candidate predicted situation costs may be determined by identifying a respective stored example situation cost CS of an example situation. The example situation may be an example situation characterized by example situation features LS, $\alpha$S, VS, VCS matching features of the candidate predicted velocity change, e.g. the vehicle velocity V5 at one of the positions P2, the vehicle velocity V1-V9 at the other of the positions P3, and the road inclination $\alpha$. The example situations of the example situation costs CS may be identified by providing the features of the respective candidate predicted velocity changes, i.e. the velocity V5 at one of the positions P2, the velocity V1-V9 at the other of the positions P3, and the road inclination $\alpha$, e.g. in the form of a vector, for a search in the storage of example situations.

The method further comprises identifying non-feasible candidate velocity changes. For example, certain velocity changes might not be possible within the length of the segment between the positions P2, P3, for example, due to a limitation of the road friction, a capacity limitation of the powertrain, and/or a capacity limitation of the brake system. For example, in fig. 5, the candidate velocity changes P2V5-P3V1 and P2V5-P3V9 might not be feasible. Whether or not a candidate velocity change is feasible may be determined when the candidate predicted situation cost thereof is determined. The approximation function may indicate that the candidate velocity change is non-feasible. Alternatively, a storage of example situations may indicate that the candidate velocity change is non-feasible. Thus, the method may comprise determining, for each of the feasible candidate predicted velocity changes, a candidate predicted situation cost, based at least partly on at least one of the example situation costs CS.

The velocity profile is determined such that a weighting function, dependent on the cost of operating the vehicle when travelling through the route, and the duration of the vehicle travelling through the route, is optimized, e.g. minimized. The weighting function may be provided in any suitable way. The weighting function provides a balance between operating costs and the cost of time, which is an indication of the productivity of the vehicle.

For the operation cost and productivity balance, the example situation costs CS, and/or the candidate predicted situation costs, may be adjusted, based at least partly on the time of driving between the adjacent positions P2, P3. In this example the candidate predicted situation costs are adjusted S7. For example, the weighting function can be

$$(1) \quad CCadj = (1 - w) * CC / CCopernom + w * \Delta t / \Delta tnom$$

where CCadj is the adjusted candidate predicted situation cost, CC is the non-adjusted candidate predicted situation cost, i.e. the operating cost for the candidate velocity change, CCopernom is a reference operating cost to normalize the operating cost CC , $\Delta t$ is the time for travelling between the positions P2, P3, $\Delta tnom$ is a reference time to normalize the time $\Delta t$, and w is a weight factor for balancing the operating cost and time. The weighting factor w may be in the interval 0 to 1. The referencing operating cost CC opernom may be determined, for example, by making it equal to the median of the predicted situation costs of all segments along the route. Alternatively, referencing operating cost CC opernom may be determined, for example, by making it equal to the mean value of the predicted situation costs of all segments along the route.

An alternative for the weighting function may be:

$$(2) \quad CCadj = (1 - w) *(CC1/CC1nom + CC2 / CC2nom) + w * \Delta t / \Delta tnom$$

where CC1 is a first type of operating cost, e.g. the cost of energy usage, and CC2 is a second type of operating cost, for example a cost of wear, e.g. a state of health cost.

Equations (1) and (2) make the cost and time dimensionless. A more general weighting function could be:

$$(3) \quad CCadj = (1-w)*f1+ w*f2$$

where f1 is at least based on the operating cost, and f2 is at least based on time.

In some embodiments, the example situation costs CS are adjusted before being used for the approximation function determination. In some embodiments, the example situation costs CS are adjusted before being stored. Thereby, the computational task of the vehicle control unit 101 is reduced.

In addition to the adjustments S7 of the candidate predicted situation costs, the velocity profile for the route RT is determined by selecting, for each pair of adjacent positions P2, P3, one of the candidate predicted situation costs, such that the sum of the candidate predicted situation costs, selected throughout the route, are minimized S8. This optimization may be done by a shortest path algorithm, for example a Bellman-Ford algorithm. For this, one of the velocities at the last position P9 of the route, has to be selected. Since the velocity at the beginning of the path, may be known as the present velocity of the vehicle, end values for the shortest path algorithm are therefore available. The velocity at the last position P9 may be selected in any suitable manner, e.g. as being equal to a legal speed limit at the end position P9.

It should be noted that the adjustments S7 of the candidate predicted situation costs may be done simultaneously with the selection, throughout the route, of the candidate predicted situation costs, for the minimization S8 of the sum of the candidate predicted situation costs. However, in some embodiments, when the time balanced candidate predicted situation costs have been obtained for all feasible candidate predicted velocity changes in the matrix MX, the velocity profile for the route RT is determined by selecting, for each pair of adjacent positions P2, P3, one of the candidate predicted situation costs, such that the sum of the candidate predicted situation costs, selected throughout the route, are minimized S8.

The optimization S8 may be done in a stepwise manner. As an alternative to the shortest path algorithm, the velocity at a present position P0 (fig. 4) of the vehicle 1 may be used as a start node in the matrix MX. Thereby, the lowest adjusted candidate predicted situation cost, for travelling between the first two adjacent positions P0, P1, may be determined as exemplified above. The candidate predicted velocity change of the lowest adjusted candidate predicted situation cost will give a velocity at the next position P1. The process for determining the lowest adjusted candidate predicted situation cost is then repeated for the next pair of adjacent positions P1, P2.

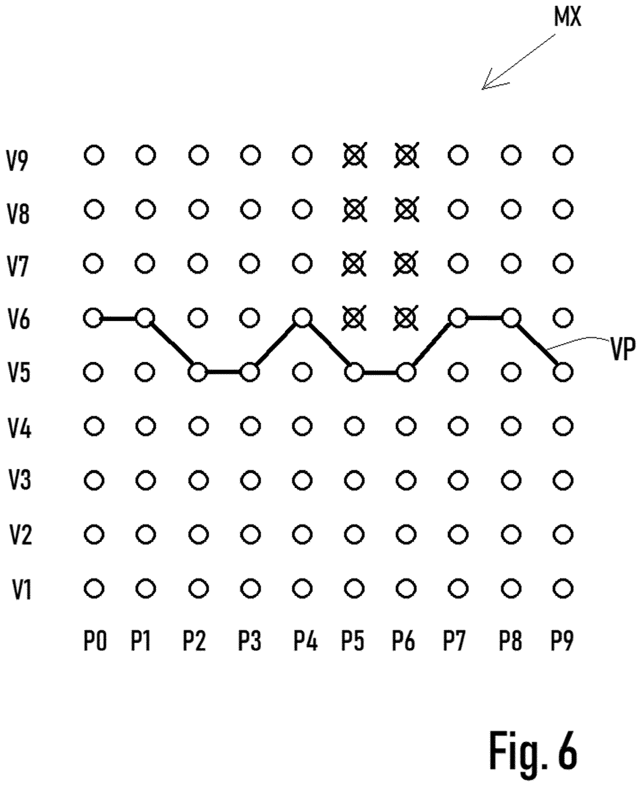

The result of the optimization S8 will be a series of selected candidate predicted velocity changes, which together form the determined velocity profile VP, as exemplified in fig. 6.

The method may further comprise determining an actual cost for operating the vehicle, and adjusting one or more of the example situation costs CS in dependence on the determined actual cost. For this, features of a driving situation, for which the actual cost was determined, may be matched to the example situation features of one or more example situations. Thereby, the accuracy of the stored example situation costs may be improved based on real costs.

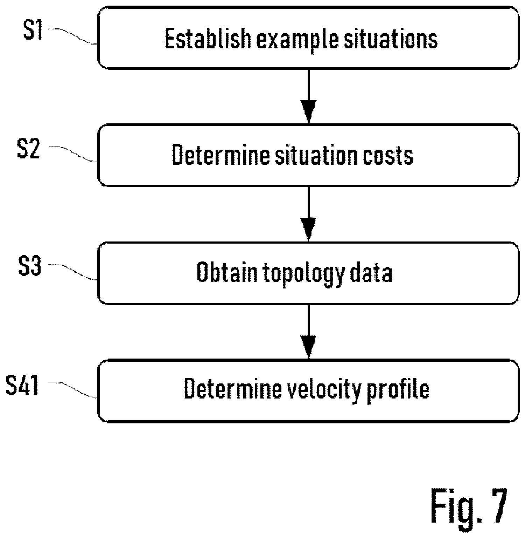

Reference is made to fig. 7, depicting steps in a method according to a more general embodiment of the invention. The method may be carried out by a vehicle control unit 101 and a stationary control unit 201, as exemplified above. The method comprises establishing S1 a plurality of example situations, wherein each example situation is characterized by a plurality of example situation features, including at least a velocity of the vehicle VS, a velocity change of the vehicle VCS, and a road inclination $\alpha$S. The method further comprises determining S2, for each of a plurality of the example situations, an example situation cost dependent on a cost for operating the vehicle in the respective example situation. The method also comprises subsequently obtaining S3 topology data, indicative of a topology of a route to be travelled by the vehicle. In addition the method comprises determining S41, based at least partly on the route topology, and at least a plurality of the example situation costs, a velocity profile for the vehicle along the route.

It is to be understood that the present invention is not limited to the embodiments described above and illustrated in the drawings; rather, the skilled person will recognize that many changes and modifications may be made within the scope of the appended claims.

**Claims**

1. A method for controlling a vehicle (1), the method comprising,

   - establishing (S1) a plurality of example situations, wherein each example situation is **characterized by** a plurality of example situation features, including at least a velocity of the vehicle (VS) in the example situation, a velocity change of the vehicle (VCS) in the example situation, and a road inclination ($\alpha$S) in the example situation,
   - determining (S2), for each of a plurality of the example situations, an example situation cost (CS) dependent on a cost for operating the vehicle in the respective example situation,
   - subsequently obtaining (S3) topology data, indicative of a topology of a route (RT) to be travelled by the vehicle,
   - determining (S4-S8, S41), based at least partly on the route topology, and at least a plurality of the example situation costs (CS), a velocity profile (VP) for the vehicle along the route (RT).

2. A method according to claim 1, **characterized in that** the example situation costs are determined by means of a vehicle model.

3. A method according to any one of the preceding claims, **characterized by** establishing an approximation function, based partly on at least a plurality of the example situations, and based partly on the example situation costs (CS) for the example situations on which the approximation function is partly based.

4. A method according to claim 3, **characterized by** establishing, in dependence on the topology data, a plurality of predicted situations, and determining, for each of at least a plurality of the established predicted situations, by means of the approximation function, a predicted situation cost (CC) indicative of a cost for operating the vehicle in the respective predicted situation, wherein the velocity profile is determined partly based on the determined predicted situation costs (CC).

5. A method according to any one of the preceding claims, **characterized in that** determining the velocity profile (VP) comprises establishing a sequence of positions (P0-P9) along the route (RT).

6. A method according to claim 5, **characterized by** associating with each of a plurality of, or all of, the positions (P0-P9), a respective altitude of the position, and/or a respective road inclination ($\alpha$) at the position.

7. A method according to any one of claims 5-6, **characterized by** determining for each of a plurality of pairs of adjacent positions (P2, P3), a predicted situation cost for operating the vehicle from one to the other of the adjacent positions, based at last partly on a predicted vehicle velocity (V5) at the pair of adjacent positions, and a predicted velocity change (P2V5-P3V1, ..) from one to the other of the adjacent positions.

8. A method according to any one of claims 5-7, **characterized by** determining, for a pair of adjacent positions (P2, P3) in the sequence of positions, a vehicle velocity (V5) at one of the positions (P2), and determining (S5) a plurality of candidate predicted velocity changes (P2V5-P3V1, ..), each providing a respecting vehicle velocity (V1-V9) at the other of the positions (P3).

9. A method according to claim 8, **characterized by** determining (S6), for each a plurality of, or all of, the candidate predicted velocity changes (P2V5-P3V1, ..), a candidate predicted situation cost (CC), based at least partly on at least one of the example situation costs (CS).

10. A method according to claim 9, **characterized in that** at least a plurality of the candidate predicted situation costs are determined, by means of an approximation function established based partly on at least a plurality of the example situations, and based partly on the example situation costs for the example situations on which the approximation function is partly based.

11. A method according to any one of claims 9-10, **characterized by** adjusting (S7) the candidate predicted situation costs (CC), based at least partly on the time ($\Delta t$) of driving between the adjacent positions.

12. A method according to any one of the preceding claims, **characterized by** establishing an approximation function, based partly on at least a plurality of the example situations, and based partly on the example situation costs (CS) for the example situations on which the approximation function is partly based, for determining predicted situation costs for respective predicted situations of the vehicle.

13. A method according to claim 12, **characterized by** determining an actual cost for operating the vehicle, and adjusting the approximation function in dependence on the determined actual cost.

14. A method according to any one of the preceding claims, **characterized by** determining an actual cost for operating the vehicle, and adjusting an example situation cost (CS) in dependence on the determined actual cost.

15. A method according to any one of the preceding claims, **characterized in that** the plurality of example situation features (LS, $\alpha$S, VS, VCS) characterizing the example situations include a load (LS) of the vehicle (1).

16. A computer program comprising program code means for performing the steps of any one of claims 1-15 when said program is run on a computer, or a group of computers.

17. A computer readable medium carrying a computer program comprising program code means for performing the steps of any one of claims 1-15 when said program product is run on a computer, or a group of computers.

18. A control unit, or a group of control units (101, 201), configured to perform the steps of the method according to any one of claims 1-15.

**Patentansprüche**

1. Verfahren zum Steuern eines Fahrzeugs (1), das Verfahren umfassend,

   - Einrichten (S1) einer Vielzahl von Beispielsituationen, wobei jede Beispielsituation **durch** eine Vielzahl von Beispielsituationsmerkmalen **gekennzeichnet ist,** einschließlich mindestens einer Geschwindigkeit des Fahrzeugs (VS) in der Beispielsituation, einer Geschwindigkeitsänderung des Fahrzeugs (VCS) in der Beispielsituation; und einer Straßenneigung ($\alpha$S) in der Beispielsituation,
   - Bestimmen (S2), für jede einer Vielzahl der Beispielsituationen, von Beispielsituationskosten (CS) abhängig von den Kosten zum Betreiben des Fahrzeugs in der jeweiligen Beispielsituation,
   - anschließendes Erhalten (S3) von Topologiedaten, die auf eine Topologie einer Route (RT), die von dem Fahrzeug zurückzulegen ist, hinweist,
   - Bestimmen (S4-S8, S41), basierend mindestens teilweise auf der Routentopologie, und mindestens einer Vielzahl der Beispielsituationskosten (CS), eines Geschwindigkeitsprofils (VP) für das Fahrzeug entlang der Route (RT).

2. Verfahren nach Anspruch 1, **dadurch gekennzeichnet, dass** die Beispielsituationskosten mittels eines Fahrzeugmodells bestimmt werden.

3. Verfahren nach einem der vorstehenden Ansprüche, **gekennzeichnet durch** das Einrichten einer Näherungsfunktion, basierend teilweise auf mindestens einer Vielzahl der Beispielsituationen, und basierend teilweise auf den Beispielsituationskosten (CS) für die Beispielsituationen, auf denen die Näherungsfunktion teilweise basiert.

4. Verfahren nach Anspruch 3, **gekennzeichnet durch** das Einrichten, in Abhängigkeit von den Topologiedaten, einer Vielzahl von vorhergesagten Situationen und das Bestimmen, für jede von mindestens einer Vielzahl der eingerichteten vorhergesagten Situationen, mittels der Näherungsfunktion, der vorhergesagten Situationskosten (CC), die auf die Kosten zum Betreiben des Fahrzeugs in der jeweiligen vorhergesagten Situation hinweisen, wobei das Geschwindigkeitsprofil teilweise basierend auf den bestimmten vorhergesagten Situationskosten(CC) bestimmt wird.

5. Verfahren nach einem der vorstehenden Ansprüche,
   **dadurch gekennzeichnet, dass** das Bestimmen des Geschwindigkeitsprofils (VP) das Einrichten einer Sequenz von Positionen (P0-P9) entlang der Route (RT) umfasst.

6. Verfahren nach Anspruch 5, **gekennzeichnet durch** das Verknüpfen, mit jeder einer Vielzahl der, oder allen, Positionen (P0-P9), einer jeweiligen Höhe der Position und/oder einer jeweiligen Straßenneigung ($\alpha$) an der Position.

7. Verfahren nach einem der Ansprüche 5 bis 6, **gekennzeichnet durch** das Bestimmen für jedes einer Vielzahl von Paaren von angrenzenden Positionen (P2, P3), der vorhergesagten Situationskosten zum Betreiben des Fahrzeugs von einer zu den anderen der angrenzenden Positionen, basierend mindestens teilweise auf einer vorhergesagten Fahrzeuggeschwindigkeit (V5) an dem Paar von angrenzenden Positionen, und einer vorhergesagten Geschwindigkeitsänderung (P2V5-P3V1, ..) von einer zu den anderen der angrenzenden Positionen.

8. Verfahren nach einem der Ansprüche 5 bis 7, **gekennzeichnet durch** das Bestimmen, für ein Paar von angrenzenden Positionen (P2, P3) in der Sequenz von Positionen, einer Fahrzeuggeschwindigkeit (V5) an einer der Positionen (P2) und Bestimmen (S5) einer Vielzahl von vorhergesagten Kandidatengeschwindigkeitsänderungen (P2V5-P3V1, ..), die jeweils eine entsprechende Fahrzeuggeschwindigkeit (V1-V9) an der anderen der Positionen (P3) bereitstellen.

9. Verfahren nach Anspruch 8, **gekennzeichnet durch** das Bestimmen (S6), für jede einer Vielzahl der, oder allen, vorhergesagten Kandidatengeschwindigkeitsänderungen (P2V5-P3V1, ..), der vorhergesagten Kandidatensituationskosten (CC), basierend mindestens teilweise auf mindestens einer der Beispielsituationskosten (CS).

10. Verfahren nach Anspruch 9, **dadurch gekennzeichnet, dass** mindestens eine Vielzahl der vorhergesagten Kandidatensituationskosten mittels einer Näherungsfunktion, die teilweise basierend auf mindestens einer Vielzahl der Beispielsituationen eingerichtet ist, bestimmt wird; und basierend teilweise auf den Beispielsituationskosten für die Beispielsituationen, auf denen die Näherungsfunktion teilweise basiert ist.

11. Verfahren nach einem der Ansprüche 9 bis 10, **gekennzeichnet durch** das Einstellen (S7) der vorhergesagten Kandidatensituationskosten (CC), mindestens teilweise auf der Zeit ($\Delta t$) des Fahrens zwischen den angrenzenden Positionen basierend.

12. Verfahren nach einem der vorstehenden Ansprüche, **gekennzeichnet durch** das Einrichten einer Näherungsfunktion, teilweise basierend auf mindestens einer Vielzahl der Beispielsituationen; und teilweise basierend auf den Beispielsituationskosten (CS) für die Beispielsituationen, auf denen die Näherungsfunktion teilweise basiert, zum Bestimmen vorhergesagter Situationskosten für jeweilige vorhergesagte Situationen des Fahrzeugs.

13. Verfahren nach Anspruch 12, **gekennzeichnet durch** das Bestimmen von Istkosten zum Betreiben des Fahrzeugs, und Einstellen der Näherungsfunktion in Abhängigkeit von den bestimmten Istkosten.

14. Verfahren nach einem der vorstehenden Ansprüche,
    **gekennzeichnet durch** das Bestimmen von Istkosten zum Betreiben des Fahrzeugs; und Einstellen der Beispielsituationskosten (CS) in Abhängigkeit von den bestimmten Istkosten.

15. Verfahren nach einem der vorstehenden Ansprüche,
    **dadurch gekennzeichnet, dass** die Vielzahl von Beispielsituationsmerkmalen (LS, $\alpha$S, VS, VCS), die die Beispielsituationen kennzeichnen, eine Last (LS) des Fahrzeugs (1) einschließen.

**16.** Computerprogramm, umfassend Programmcodemittel zum Durchführen der Schritte nach einem der Ansprüche 1 bis 15, wenn das Programm auf einem Computer, oder einer Gruppe von Computern, ausgeführt wird.

**17.** Computerlesbares Medium, das ein Computerprogramm enthält, umfassend Programmcodemittel zum Durchführen der Schritte nach einem der Ansprüche 1 bis 15, wenn das Programmprodukt auf einem Computer, oder eine Gruppe von Computern, ausgeführt wird.

**18.** Steuereinheit, oder eine Gruppe von Steuereinheiten (101, 201), die konfiguriert ist, um die Schritte des Verfahrens nach einem der Ansprüche 1 bis 15 durchzuführen.

**Revendications**

**1.** Procédé de commande d'un véhicule (1), le procédé comprenant,

- l'établissement (S1) d'une pluralité de situations d'exemple, dans lequel chaque situation d'exemple est **caractérisée par** une pluralité de caractéristiques de situation d'exemple, comportant au moins une vitesse du véhicule (VS) dans l'exemple de situation, un changement de vitesse du véhicule (VCS) dans l'exemple de situation et une inclinaison de route ($\alpha$S) dans l'exemple de situation,
- la détermination (S2), pour chacun d'une pluralité des situation d'exemple, d'un example de coût de situation (CS) dépendant d'un coût de fonctionnement du véhicule dans la situation respective d'exemple,
- l'obtention ultérieure (S3) de données de topologie, indiquant une topologie d'un itinéraire (RT) à parcourir par le véhicule,
- la détermination (S4-S8, S41), sur la base au moins en partie de la topologie d'itinéraire, et d'au moins une pluralité de coûts de situation (CS) d'exemple, d'un profil de vitesse (VP) pour le véhicule le long de l'itinéraire (RT).

**2.** Procédé selon la revendication 1, **caractérisé en ce que** les coûts de situation d'exemple sont déterminés au moyen d'un modèle de véhicule.

**3.** Procédé selon l'une quelconque des revendications précédentes, **caractérisé par** l'établissement d'une fonction d'approximation, sur la base en partie d'au moins une pluralité des situations d'exemple, et sur la base en partie de l'exemple de coûts de situation (CS) pour les situations d'exemple sur lesquelles la fonction d'approximation est partiellement basée.

**4.** Procédé selon la revendication 3, **caractérisé par** l'établissement, dépendamment des données de topologie, d'une pluralité de situations prédites, et la détermination, pour chacune d'au moins une pluralité de situations prédites établies, au moyen de la fonction d'approximation, d'un coût de situation prédit (CC) indiquant un coût de fonctionnement du véhicule dans la situation prédite respective, dans lequel le profil de vitesse est déterminé en partie sur la base des coûts de situation prédits (CC) déterminés.

**5.** Procédé selon l'une quelconque des revendications précédentes, **caractérisé en ce que** la détermination du profil de vitesse (VP) comprend l'établissement d'une séquence de positions (P0-P9) le long de l'itinéraire (RT).

**6.** Procédé selon la revendication 5, **caractérisé par** l'association de chacune d'une pluralité ou de la totalité des positions (P0-P9), d'une altitude respective de la position, et/ou d'une inclinaison de route respective ($\alpha$) à la position.

**7.** Procédé selon l'une quelconque des revendications 5 à 6, **caractérisé par** la détermination pour chacune d'une pluralité de paires de positions adjacentes (P2, P3), d'un coût de situation prédit de fonctionnement du véhicule de l'une à l'autre des positions adjacentes, sur la base d'au moins en partie d'une vitesse prédite de véhicule (V5) au niveau de la paire de positions adjacentes, et d'un changement de vitesse prévu (P2V5-P3V1, ..) de l'une à l'autre des positions adjacentes.

**8.** Procédé selon l'une quelconque des revendications 5 à 7, **caractérisé par** la détermination, pour une paire de positions adjacentes (P2, P3) dans la séquence de positions, d'une vitesse de véhicule (V5) à l'une des positions (P2), et la détermination (S5) d'une pluralité de changements de vitesse prédits candidats (P2V5-P3V1, ..), fournissant chacune une vitesse de véhicule respectueuse (V1-V9) au niveau de l'autre des positions (P3).

9. Procédé selon la revendication 8, **caractérisé par** la détermination (S6), pour chacune d'une pluralité, ou la totalité, des changements de vitesse prédite candidates (P2V5-P3V1, ..), d'un coût de situation prédit candidat (CC), sur la base au moins en partie d'au moins l'un des coûts de situation d'exemple (CS).

10. Procédé selon la revendication 9, **caractérisé en ce qu'**au moins une pluralité des coûts de situation prédits candidats sont déterminées, au moyen d'une fonction d'approximation établie sur la base en partie d'au moins une pluralité des situations d'exemple, et sur la base en partie de l'exemple de coûts de situation pour les situations d'exemple sur lesquelles la fonction d'approximation est basée en partie.

11. Procédé selon l'une quelconque des revendications 9 à 10,
**caractérisé par** l'ajustement (S7) des coûts de situation prédits candidats (CC), sur la base au moins en partie du temps ($\Delta t$) de conduite entre les positions adjacentes.

12. Procédé selon l'une quelconque des revendications précédentes, **caractérisé par** l'établissement d'une fonction d'approximation, sur la base en partie d'au moins une pluralité des situations d'exemple, et sur la base en partie de l'exemple de coûts de situation (CS) pour les situations d'exemple sur lesquelles la fonction d'approximation est partiellement basée, pour déterminer des coûts de situation prédits pour des situations prédites respectives du véhicule.

13. Procédé selon la revendication 12, **caractérisé par** la détermination d'un coût réel de fonctionnement du véhicule, et l'ajustement de la fonction d'approximation en fonction du coût réel déterminé.

14. Procédé selon l'une quelconque des revendications précédentes, **caractérisé par** la détermination d'un coût réel de fonctionnement du véhicule, et l'ajustement d'un exemple de coût de situation (CS) en fonction du coût réel déterminé.

15. Procédé selon l'une quelconque des revendications précédentes, **caractérisé en ce que** la pluralité de caractéristiques de situation d'exemple (LS, $\alpha$S, VS, VCS) caractérisant les situations d'exemple comportent une charge (LS) du véhicule (1).

16. Programme informatique comprenant un moyen de code de programme pour réaliser les étapes selon l'une quelconque des revendications 1 à 15 lorsque ledit programme est exécuté sur un ordinateur, ou un groupe d'ordinateurs.

17. Support lisible par ordinateur portant un programme informatique comprenant un moyen de code de programme pour réaliser les étapes selon l'une quelconque des revendications 1 à 15 lorsque ledit produit de programme est exécuté sur un ordinateur, ou un groupe d'ordinateurs.

18. Unité de commande, ou groupe d'unités de commande (101, 201), configurés pour réaliser les étapes du procédé selon l'une quelconque des revendications 1 à 15.

Fig. 1

S1 — Establish example situations

S2 — Determine situation costs

S3 — Obtain topology data

S4 — Establish sequence of positions

S5 — Determine candidate velocity transitions

S6 — Determine candidate costs

S7 — Adjust candidate costs

S8 — Minimize sum of candidate costs

Fig. 2

| LS | aS | VS | VCS | CS |
|---|---|---|---|---|
| | | | | |
| LS1 | aS1 | VS1 | VCS1 | CS1 |
| LS1 | aS1 | VS1 | VCS2 | CS2 |
| LS1 | aS1 | VS1 | VCS3 | CS3 |
| . | . | . | . | . |
| . | . | . | . | . |
| . | . | . | . | . |
| LS1 | aS1 | VS2 | VCS1 | CSn |
| LS1 | aS1 | VS2 | VCS2 | CSn+1 |
| . | . | . | . | . |
| . | . | . | . | . |
| . | . | . | . | . |

# Fig. 3

Fig. 4

Fig. 5

EP 3 990 326 B1

Fig. 6

22

S1 — Establish example situations

S2 — Determine situation costs

S3 — Obtain topology data

S41 — Determine velocity profile

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008039950 A1

**Non-patent literature cited in the description**

- Look-ahead control for heavy trucks to minimize trip time and fuel consumption. **HELLSTRÖM ; IVARSSON ; ÅSLUND ; NIELSEN.** Control Engineering Practice. Linköping University, 2009